# EUROPEAN PATENT APPLICATION

(11) **EP 1 701 331 A1**
(43) Date of publication of application: **13.09.2006**
(21) Application number: 05101759.8
(22) Date of filing: 07.03.2005
(51) Int. Cl.: G09G 3/34, H04M 1/22

(54) **System and method for adjusting a backlight for a display for an electronic device**

(71) Applicant: Research In Motion Limited, Waterloo, Ontario N2L 3W8 (CA)
(72) Inventor: Vuong, Thanh Vinh, Kitchener, Ontario N2E 4B9 (CA); Fyke, Steven, Waterloo, Ontario N2J 4T3 (CA)
(74) Representative: Rickard, David John

(57) **Abstract**

The invention provides a system for controlling a backlight level for a display in an electronic device. The system comprises the display, a backlight system connected to the display, a controller controlling backlight levels generated by the backlight system, a light sensor, a keypad, an activation sensor, a microprocessor controlling aspects of the system and software operating on the microprocessor. The software monitors signals from the activation sensor for activation of the device and upon determining that the device has been activated, utilizes signals from the light sensor, a received signal or the keypad to determine a target backlight level about the device and then controls the controller to adjust to the backlight level produced by the backlight system in response to the target backlight light level.

## Description

The present invention relates to a system and method controlling power consumption by an electronic device, more particularly to controlling the intensity of a backlight for a display of the device, using information about the ambient environment associated with the device.

Current wireless handheld mobile communication devices perform a variety of functions to enable mobile users to stay current with information and communications, such as e-mail, corporate data and organizer information while they are away from their desks. A wireless connection to a server allows a mobile communication device to receive updates to previously received information and communications. The handheld devices optimally are lightweight, compact, and use low amounts of power to facilitate usage by professionals on the go. Such handheld devices invariably have a display thereon to provide visual indicators (graphics, text, pictures, video etc.) generated by the device to a user. Frequently, liquid crystal displays (LCDs) are used, as they are readily available and relatively inexpensive devices. The displays are typically provided as a reflective, transmissive or transreflective LCD panel.

However, reading displays on prior art devices can be difficult as ambient conditions surrounding the device change. LCDs in particular use backlighting to increase their readability. However, there may be dynamic ambient conditions where the backlight level should be increased for better readability or decreased for power savings. For example, if a user using a device having a non-reflective screen is first in a darkened area and then moves to a brighter ambient environment, the backlight level for the display may be too bright in the darkened area and not bright enough in the brighter area. There are existing prior art systems which adjust backlight conditions, however, they lack flexibility in adjusting backlight levels in certain ambient environments.

There is a need for a system and method which addresses deficiencies in the prior art of adjusting the backlight level for a display in an electronic device.

### SUMMARY

In a first aspect, a system for controlling a backlight level for a display in an electronic device is provided. The system comprises the display, a backlight system connected to the display, a controller controlling backlight levels generated by the backlight system, a light sensor, a keypad, an activation sensor, a microprocessor controlling aspects of the system and software operating on the microprocessor. The software monitors signals from the activation sensor for activation of the device and upon determining that the device has been activated, utilizes signals from the light sensor to determine an ambient light level about the device and then controls the controller to adjust to the backlight level produced by the backlight system in response to the ambient light level.

In the system, the activation sensor may be a motion sensor. Alternatively, the activation sensor may be a power switch.

In the system, the software may control the duty cycle of the backlight system to adjust the backlight level. Alternatively, the software may control the number of lights activated.

In a second aspect, a system for controlling a backlight level for a display in an electronic device is provided. The system comprises the display, a backlight system connected to the display, a controller controlling backlight levels generated by the backlight system, a keypad, an activation sensor, a microprocessor controlling aspects of the system and software operating on the microprocessor. The software monitors signals from the activation sensor for activation of the device and upon determining that the device has been activated, utilizes signals selected from a depressed key on the keypad and a received signal by the device to control the controller to adjust to the backlight level produced by the backlight system.

In the system, the software may further monitor for signals from the keypad and upon determining that a key has been activated, it may utilize signals from the key to control the controller to adjust the backlight level produced by the backlight system.

In the system, the software may adjust the backlight level by one predetermined increment after the key has been held down for a predetermined time. Alternatively, the software may decrement the backlight level by a predetermined amount.

Alternatively still, in the system, the software may adjust the backlight level by one predetermined increment upon an activation of the key. Alternatively still, the software may decrement the backlight level by a predetermined amount.

In the system, the received signal may contain time data associated with a location associated with the device.

In the system, the software may provide to a user of the device a list of previous backlight levels, and the user utilize the predetermined key to select a target backlight level from the list.

In a third aspect, a method for controlling a backlight level for a display in an electronic device is provided. The method comprises providing an activation sensor to detect activation of the device; upon detection of activation of the sensor, utilizing signals from one of a light sensor, a received signal and a depressed key on a keypad on the device to determine a target backlight level for the device; and adjusting the backlight level in response to the target backlight level.

In the method, the activation sensor may be a motion sensor. Further, upon detection of activation of the motion sensor, the method may utilize signals from the light sensor to determine a target backlight light level for the device, then adjust the backlight level in response to the target backlight level.

In the method, the activation sensor may be a motion sensor. Further, upon detection of activation of the motion sensor, the method may utilize signals from the predetermined key to determine the target backlight light level for the device, then adjust the backlight level in response to the target backlight level.

Alternatively, in the method, the received signal may contain time data associated with a location associated with the device.

In other aspects various combinations of sets and subsets of the above aspects are provided.

### BRIEF DESCRIPTION OF THE DRAWINGS

The foregoing and other aspects of the invention will become more apparent from the following description of specific embodiments thereof and the accompanying drawings which illustrate, by way of example only, the principles of the invention. In the drawings, where like elements feature like reference numerals (and wherein individual elements bear unique alphabetical suffixes):

FIG. 1 is a top view of an exemplary device having a display incorporating an embodiment;

FIG. 2 is a block diagram of electronic and mechanical components of the device of FIG. 1;

FIG. 3 is a graph illustrating blacklight levels for the display of FIG. 1; and

FIG. 4 is a flow diagram of an algorithm controlling backlight levels of the display of FIG. 1.

### DETAILS

The description which follows, and the embodiments described therein, are provided by way of illustration of an example, or examples, of particular embodiments of the principles of the present invention. These examples are provided for the purposes of explanation, and not limitation, of those principles and of the invention. In the description, which follows, like parts are marked throughout the specification and the drawings with the same respective reference numerals.

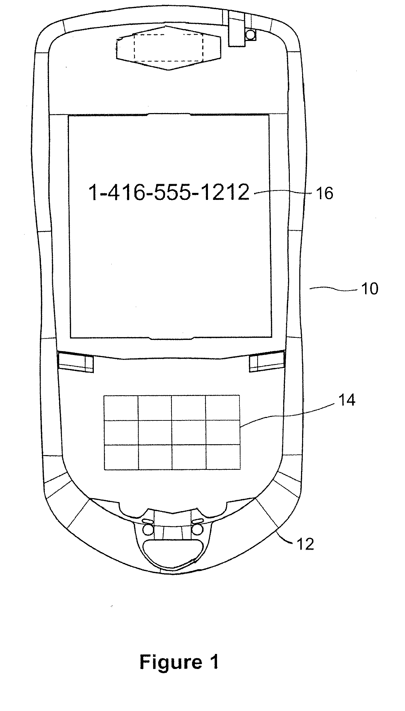

FIG. 1 illustrates a handheld mobile communication device 10 comprising a housing 12, an input device (e.g. keypad 14), and an output device (a display 16), which is preferably a full graphic Liquid Crystal Display (LCD). Other types of output devices may alternatively be utilized. Physically for device 10, housing 12 may be elongated vertically, or may take on other sizes and shapes (comprising clamshell housing structures). Keypad 14 may comprise a mode selection key, a thumbwheel or other hardware or software for switching between text entry and telephony entry.

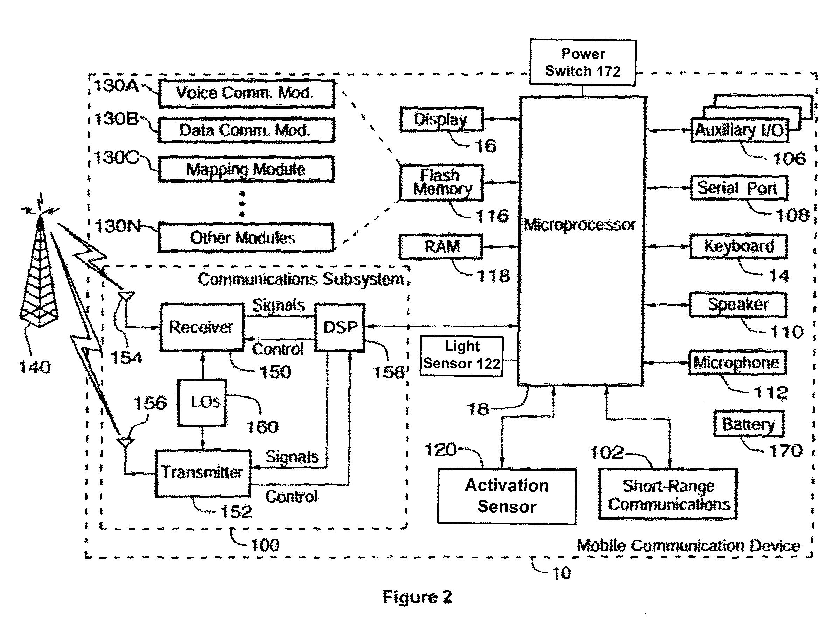

Referring to Fig. 2, functional elements of device 10 are provided. The functional elements are generally electrical or electro-mechanical devices. In particular, microprocessor 18 is provided to control and receive almost all data, transmissions, inputs and outputs related to device 10. Microprocessor 18 is shown schematically as coupled between keypad 14 and display 16 and a series of other internal devices to device 10. Microprocessor 18 controls the operation of the display 16, as well as the overall operation of the device 10, in response to actuation of keys on the keypad 14 by a user. For the embodiment, a thumbwheel input device may be considered to be part of keypad 14, even if it is physically separated from a main section of keypad 14 and has a separate control circuit. Exemplary microprocessors for microprocessor 18 comprise Data 950 (trade-mark) series microprocessors and the 6200 series microprocessor, both available from Intel Corporation.

In addition to the microprocessor 18, other internal devices of the device 10 are shown schematically in FIG. 2. These include: a communication subsystem 100; a short-range communication subsystem 102; keypad 14 and display 16, with other input/output devices including a set of auxiliary 1/0 devices 106, a serial port 108, a speaker 110 and a microphone 112; as well as memory devices including a flash memory 116 and Random Access Memory (RAM) 118; activation sensor 120, light sensor 122 and various other device subsystems (not shown). The device 10 is preferably a two-way radio frequency (RF) communication device having voice and data communication capabilities. In addition, device 10 preferably has the capability to communicate with other computer systems via the Internet.

Operating system software executed by the microprocessor 18 is preferably stored in a computer readable medium, such as flash memory 116, but may be stored in other types of memory devices, such as read only memory (ROM) or similar storage element. In addition, system software, specific device applications, or parts thereof, may be temporarily loaded into a volatile store, such as RAM 118. Communication signals received by the mobile device may also be stored to RAM 118.

Microprocessor 18, in addition to its operating system functions, enables execution of software applications on device 10. A set of software applications that control basic device operations, such as a voice communication module 130A and a data communication module 130B, may be installed on the device 10 during manufacture or downloaded thereafter. Cell mapping module 130C may also be installed on device 10 during manufacture. As well, additional software modules, illustrated as an other software module 130N, which may be, for instance, a personal information manager (PIM) application, may be installed during manufacture or downloaded thereafter into device 10. PIM application is preferably capable of organizing and managing data items, such as e-mail messages, calendar events, voice mail messages, appointments, and task items.

Communication functions, including data and voice communications, are performed through the communication subsystem 100, and possibly through the short-range communication subsystem 102. Communication subsystem 100 includes receiver 150, transmitter 152 and one or more antennas, illustrated as receive antenna 154 and transmit antenna 156. In addition, communication subsystem 100 also includes processing module, such as digital signal processor (DSP) 158 and local oscillators (LOs) 160. The specific design and implementation of communication subsystem 100 is dependent upon the communication network in which device 10 is intended to operate. For example, communication subsystem 100 of the device 10 may be designed to operate with the Mobitex (trade-mark), DataTAC (trade-mark) or General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access CDMA, Personal Communication Service (PCS), Global System for Mobile Communication (GSM), etc. Other types of data and voice networks, both separate and integrated, may also be utilized with device 10.

In addition to processing communication signals, DSP 158 provides for control of receiver 150 and transmitter 152. For example, gains applied to communication signals in receiver 150 and transmitter 152 may be adaptively controlled through automatic gain control algorithms implemented in DSP 158.

In a data communication mode, a received signal, such as a text message or web page download, is processed by the communication subsystem 100 and is provided as an input to microprocessor 18. The received signal is then further processed by microprocessor 18 which can then generate an output to the display 16 or to an auxiliary I/O device 106. A device user may also compose data items, such as e-mail messages, using specific keys on keypad 14, a thumbwheel associated with keypad 14, and/or some other auxiliary I/O device 106, such as a touchpad, a rocker switch, a separate thumbwheel or some other input device. The composed data items may then be transmitted over communication network 140 via communication subsystem 100.

In a voice communication mode, overall operation of device 10 is substantially similar to the data communication mode, except that received signals are output to speaker 110, and signals for transmission are generated by microphone 112. Alternative voice or audio I/O subsystems, such as a voice message recording subsystem, may also be implemented on device 10. In addition, display 16 may also be utilized in voice communication mode, for example, to display the identity of a calling party, the duration of a voice call, or other voice call related information.

Short-range communication subsystem 102 enables communication between device 10 and other proximate systems or devices, which need not necessarily be similar devices. For example, the short-range communication subsystem may include an infrared device and associated circuits and components, or a Bluetooth (trade-mark) communication module to provide for communication with similarly-enabled systems and devices.

Powering the entire electronics of the mobile handheld communication device is power source 170. Preferably, the power source 170 includes one or more batteries. More preferably, the power source 170 is a single battery pack, especially a rechargeable battery pack.

Power switch 172 provides an "on/off" switch for device 10. Upon activation of power switch 172 a process is initiated to turn on device 10. Upon deactivation of power switch 172, a process is initiated to turn off device 10. Power to device 10 may also be controlled by other devices and by internal software applications, as described further below.

Referring Figs. 1, 2 and 3, although not shown as a separate item, display 16 has a backlight system to assist in the viewing display 16, especially under low-light conditions. A backlight system is almost invariably present in a LCD. A typical backlight system comprises a lighting source, such as a series of LEDs or a lamp located behind the LCD panel of the display, and a controller to control activation of the lighting source. The lamp may be fluorescent, incandescent, electroluminescent or any other suitable light source. As the lighting sources are illuminated, their light shines through the LCD panel providing backlight to the display. The intensity of the backlight level may be controlled by the controller by selectively activating a selected number of lighting sources (e.g. one, several or all LEDs) or by selectively controlling the activation duty cycle of the activated lighting sources (e.g. a duty cycle anywhere between 0% to 100% may be used).

To assist with one method of adjusting the backlight level, light sensor 122 is provided on device 10. Sensor 122 is a light sensitive device which converts detected light levels into an electrical signal, such as a voltage. It may be located anywhere on device 10, having considerations for aesthetics and operation characteristics of sensor 122. In one embodiment, an opening for light to be received by sensor 122 is located on the front cover of the housing of device 10 to reduce the possibility of blockage of the opening. In other embodiments, multiple sensors 122 may be provided and the software may provide different emphasis on signals provided from different sensors 122. The signal(s) provided by sensor(s) 122 can be used by a circuit in device 10 to determine when device 10 is in a well-lit, dimly lit or moderately-lit environment. This information can then be used to control backlight levels for display 16.

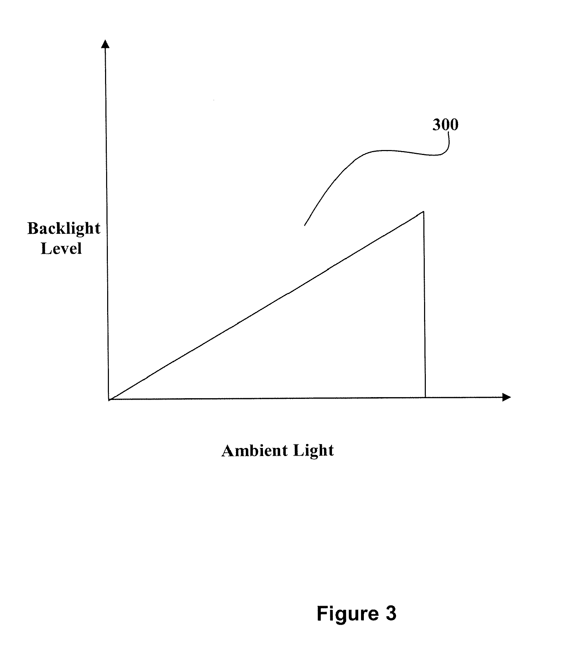

Referring to Fig. 3, graph 300 shows a backlight level for display 16 on the y-axis compared against a level of ambient light surrounding device 16 on the x-axis. As is shown, graph 300 has in a low backlight level when display 16 is in a very dark environment. As the amount of ambient light increases, the backlight level increases as well. Graph 300 provides a linear increase in backlight level intensity to as the amount of ambient light increases. At a certain point, the ambient light conditions are very bright and as such, the backlight may not be very effective in those conditions. As shown in graph 300, at that point, backlighting is turned off. It will be appreciated that in other embodiments for other LCDs, other graphs of backlight level progressions may be used, including step-wise progressions and non-linear progressions. A backlight level progression may be expressed as a formula, which may be used by software to determine an appropriate control signal for the controller of the backlight system for a given level of ambient light. In other embodiments, a backlight level progression may be stored as a table providing a set of backlight levels for a corresponding set of ambient light levels. In other embodiments, a series of different adjustment algorithms may be used.

The embodiment provides a system and method for dynamically adjusting the lighting intensity of the backlight on display 16. This is accomplished by determining for ambient conditions surrounding device 10 (by monitoring for example, use of the device, powering on of the device or sensing movement of the device) and power application software installed on device 10. Each is described in turn.

The embodiment provides several modes of operation to control the backlight level. Using the components and software in device 10, software modules implement the operation of each mode. One embodiment uses the C programming language to create the modules. Other embodiments may use java or C++. Each mode is described in turn.

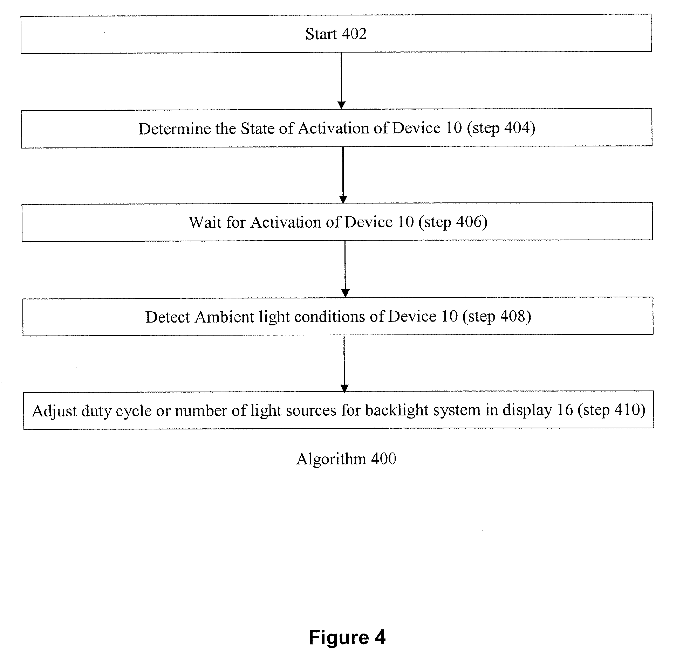

Referring to Fig. 4, algorithm 400 provides a first mode used to determine when device 10 is activated and then to automatically adjust the backlight level using data provided by light sensor(s) 122. Algorithm 400 begins at start 402 and then in step 404 determines the state of activation of device 10. If it is determined that device 10 is "off", then at step 406, algorithm 400 waits for the activation of device 10. More particularly, signals received by sensor(s) 120 or switch 172 are used to determine when device 10 is being moved from a resting state to indicate that device 10 is intended to being activated. For monitoring for activation of device 10, the software uses signals from power switch 172 and/or signals from sensor(s) 120 to detect its state of activation. Each sensor 120 is an activation sensor providing an indication of movement or usage of device 10. The activation sensor may be a mercury switch, an accelerometer or any other motion sensing device which can be incorporated within device 10. If sensor 120 is implemented as a mercury switch (or a comparable tilt switch), then electrical signals generated from the switch are provided to microprocessor 18 and software operating on microprocessor 18 is provided to detect signals from the switch and to determine whether the signals received mean that device 10 is at rest or is moving. If sensor 120 is implemented as an accelerometer, signals therefrom can be used by the software to detect motion and to detect a displacement vector, since accelerometers, as force measuring devices, provide force information which can be used to derive displacement information using mathematical integration methods. As such, signals from the accelerometer can be used to detect when device 10 is moved from its resting position to an active position and when device 10 is returned to its resting position.

Alternatively still, sensor 120 may be a spring loaded switch which is in one position (either open or closed) when device 10 is placed flatly on a surface (e.g. flat on its back, if sensor 120 is a spring-loaded switch located on the back of device 10) and is automatically switched to a second position (either closed or open) when device 10 is lifted from the surface. In still another sensing arrangement, if device 10 is electrically connected to a docking station, allowing device 10 to communicate with another device, such as a computer (not shown), then the software can detect when device 10 is docked and undocked in its cradle. Other embodiments may use wireless systems, such as Bluetooth (trade-mark) enabled systems, to detect when device 10 is near a detecting or docking station. Other types of sensors known in the art may be used for sensor 120. For each type of sensor 120, depending on its sensing dynamics, one detection of one state will indicate that device 10 is being moved and detection of another state will indicate that device 10 has stopped being moved. It will be appreciated that for each of the different types of sensors for motion sensor 120, an appropriate software interface is provided to enable to the power application to register the status of sensor 120. Alternatively, sensor 120 may be implemented as power switch 172.

Next, in step 408, once the software determines that device 10 is being moved and activated, signals from sensor(s) 122 are read to determine the current ambient lighting conditions. Finally, in step 410, based on the signals received from device 10, the software uses an algorithm to determine a target backlight level for the device and adjusts the backlight level for display 16 according to the target backlight level. In one embodiment, the algorithm may map a series of targeted backlight levels against detected ambient light conditions, as described above. Once the target backlight level is determined by the software, the backlight level may be implemented by adjusting the duty cycle of the backlight system to an appropriate predetermined cycle. Alternatively or additionally, the number of light sources may be changed to provide the required backlight level. It will be appreciated that different target backlight levels may be set for a LCD depending on whether the display is provided as a reflective, transmissive or transreflective LCD display panel.

In another mode, once the software on device 10 determines that device 10 has been activated (e.g. through activation of power button 172, depression of a key on keypad 14 or turning of a thumbwheel), the software monitors for a next predetermined input signal to indicate that the backlight level is to be adjusted. The next predetermined input can be provided by the activation of a key on keypad 14, the activation and continued depression of a key or a successive repetitive activation of a key, directional rotation of a thumbwheel or any other predetermined input. In one embodiment, the key is predetermined (e.g. the spacebar, the return key or the thumbwheel). In another embodiment, software may scan for activation signals received from any key. For example, if the predetermined input is the pressing and holding down of a key, after device 10 is activated, if the user presses and holds down the key for a certain period of time, e.g. for a time longer than 0.5 seconds, then the software recognizes the activation signal from the key and activates the backlight level from a level of being completely off and incrementally increases the backlight level while the key is continued to be held down. For example, the backlight level may be adjusted after each additional 0.3 second interval that the key is held down. Optionally, a message or icon may be generated on display 16 indicating that the backlight level is being changed. Alternatively, if the predetermined input is the successive repetitive activation of a key, for each activation signal generated by the pressing of the key, the software increases the backlight level by a set amount. In another embodiment, if the thumbwheel is the predetermined input device, if the thumbwheel is turned upward, then for each activation signal generated by an upward turn on the thumbwheel by one or more position(s) (when the user is facing device 10), the backlight intensity is increased by one level. Similarly, if the thumbwheel is turned downward, for each activation signal generated by a downward turn, the backlight intensity is decreased by one level. It will be appreciated that in another embodiment, the backlight level may start as being fully-on, then gradually reduced in intensity. It will be appreciated that any time intervals can be used.

In another mode the backlight level may be adjusted using location data derived from other sources. For example, external data (e.g. GPS and date and time data) which is provided to device 10 in a received signal (as described earlier) may be used by device 10 to infer external ambient lighting conditions for the device. The time and day data provides an indication whether it is day time or night time. The location information associated with a presumed location of the device provides information which can be used to identify the current time zone of the (presumed) location of the device and to refine whether the location is currently in daytime or night time conditions. Other location or state information may be provided automatically from a data push system, from an outside source, such as a push-email server or a web-alert system. For example, a web-alert system may provide data relating to an immediate local weather forecast and based on the forecast (e.g. mostly sunny, partly cloudy, overcast, etc.) an appropriate adjustment can be made to the backlight level.

In any mode, the backlight level for a given determined ambient condition may be stored by the software operating on device 10 as a user preference. A list of user preferences of backlight levels for given ambient conditions may then be used by the software to present backlight level options to the user to allow the user to make a selection for a target backlight level depending on the immediate environment of device 10. The software may ask the user to select the target backlight level using a predetermined key.

In other embodiments, the backlight level for device 10 may be adjusted dynamically, reacting to changes to the current ambient lighting environment surrounding device 10. In such embodiments, several real-time readings of sensor(s) 122 can be made with dynamic adjustments made to the backlight level according to the readings.

Although the invention has been described with reference to certain specific embodiments, various modifications thereof will be apparent to those skilled in the art without departing from the scope of the invention as outlined in the claims appended hereto.

## Claims

1. A system for controlling a backlight level for a display in an electronic device, said system comprising:
said display;
a backlight system connected to said display to produce said backlight level;
a controller controlling backlight levels generated by said backlight system;
a keypad;
an activation sensor;
a microprocessor controlling aspects of said system; and
software operating on said microprocessor to monitor signals from said activation sensor for activation of said device and upon determining that said device has been activated, to monitor for another signal or signals and to then control said controller to adjust said backlight level in response to said another signal or signals.

2. The system as claimed in claim 1 wherein it comprises a light sensor and wherein said another signal or signals comprises a signal or signals from said light sensor, the software operating on said microprocessor causing said microprocessor to utilize the signal or signals from the light sensor to determine an ambient light level about said device and to then control the controller to adjust said backlight level in response to said ambient light level.

3. The system as claimed in claim 1 or claim 2 wherein said activation sensor is a motion sensor or a power switch.

4. The system as claimed in any one of claims 1 to 3, wherein said software further adjusts said backlight level utilizing external data received in a received signal received by said device.

5. The system as claimed in claim 1 wherein, when said software operating on said microprocessor determines that said device has been activated through monitoring signals from said activation sensor, it causes said microprocessor to monitor for activation signals from one of: a predetermined key in said keypad and a received signal from an external source; and to utilize said signals to control said controller to adjust said backlight level produced by said backlight system.

6. The system as claimed in claim 5, wherein said predetermined key is selected from a thumbwheel and first and second keys in said keypad.

7. The system as claimed in claim 6, wherein said software adjusts said backlight level by one predetermined increment or decrement upon an activation of said predetermined key or after said predetermined key is held down for a predetermined time.

8. The system as claimed in claim 6 or claim 7, wherein said received signal contains time data associated with a location associated with said device.

9. The system as claimed in any one of claims 6 to 8, wherein said software provides on said device a list of previous backlight levels to a user of said device to identify a target backlight level, and said user utilizes said predetermined key to select said target backlight level.

10. The system as claimed in any preceding claim wherein said software adjusts a duty cycle of lights in said backlight system or a number of lights activated in said backlight system to adjust said backlight level.

11. A method for controlling a backlight level for a display in an electronic device, said method comprising:
providing an activation sensor to detect activation of said device;
upon detection of activation of said activation sensor, utilizing signals from one of a light sensor, a received signal to said device and a predetermined key on a keypad of said device to determine a target backlight level for said device; and
adjusting said backlight level in response to said target backlight level.

12. The method as claimed in claim 11 wherein
said activation sensor is a motion sensor;
upon detection of said activation of said activation sensor, utilizing signals from said light sensor to determine said target backlight light level for said device; and
adjusting said backlight level in response to said target backlight level.

13. The method as claimed in claim 11 wherein
said activation sensor is a motion sensor;
upon detection of said activation of said activation sensor, utilizing signals from said predetermined key to determine said target backlight light level for said device; and
adjusting said backlight level in response to said target backlight level.

14. The method as claimed in any one of claims 11 to 13, wherein said received signal contains time data associated with a location associated with said device.

15. A machine readable medium comprising computer code means executable in a processor of the system as claimed in any one of claims 1 to 10 for implementing the method as claimed in any one of claims 11 to 14.

16. An electronic device comprising a system as claimed in any one of claims 1 to 10.

17. A wireless communications system comprising at least one electronic device as claimed in claim 16.
